# EUROPÄISCHE PATENTSCHRIFT

(11) **EP 1 504 702 B1**
(45) Veröffentlichungstag und Bekanntmachung des Hinweises auf die Patenterteilung: **31.05.2006**
(21) Anmeldenummer: 04015144.1
(22) Anmeldetag: 28.06.2004
(51) Int. Cl.: A47J 27/21

(54) **Elektrisch beheizbares Kochgeschirr und Verfahren zu dessen Montage**
Electric kettle and mounting method therefor
Bouilloire électrique et procédé de montage

(30) Priorität: 05.08.2003 DE 10335822
(43) Veröffentlichungstag der Anmeldung: 09.02.2005
(73) Patentinhaber: BSH Bosch und Siemens Hausgeräte GmbH, 81739 München (DE)
(72) Erfinder: Kramer, Siegmund, 83417 Kirchanschöring (DE); Mühlbacher, Richard, 83224 Grassau (DE); Steffl, Michael, 83250 Marquartstein (DE)

(56) Entgegenhaltungen:
- GB-A- 2 346 540
- US-A- 5 908 570

## Beschreibung

Die vorliegende Erfindung betrifft ein elektrisch beheizbares Kochgeschirr gemäß Oberbegriff des Patentanspruchs 1 sowie ein Verfahren zur Montage eines elektrisch beheizbaren Kochgeschirrs gemäß Oberbegriff des Patentanspruchs 12.

Elektrisch beheizbare Kochgefäße wie bspw. Wasserkocher o. dgl. weisen oftmals an einem unteren Abschnitt einer Außenmantelfläche einen metallischen Abdeckring auf, der zur Verkleidung einer Verbindungsstelle mit einem Gefäßboden und/oder aus gestalterischen bzw. Designgründen angebracht ist. Der typischer Weise aus Edelstahl- oder Aluminiumblech bestehende Abdeckring kann mit der Außenmantelfläche des Kochgefäßes verschraubt oder verschnappt sein oder auch mittels des Gefäßbodens verklemmt sein solche Lösung ist Z.B, in US-A-5908570 offenbart. Bei einer im Betrieb des Heizmoduls auftretenden Erwärmung des Kochgefäßes dehnt sich dieses typischer Weise stärker aus als der Abdeckring, da das Kochgefäß aus Kunststoff besteht und daher einen anderen Wärmeausdehnungskoeffizienten aufweist als der aus Metall bestehende Abdeckring.

Die Verbindung des Kochgefäßes zum Gefäßboden soll während des Betriebs des Kochgeschirrs eine möglichst geringe Biegekraft auf die Kanne ausüben, um Schäden bspw. auf Grund von Spannungsrissen an der Kanne zu verhindern. Der Abdeckring soll auch bei der Gebrauchstemperatur der Kanne keine Kraft auf die Kanne ausüben, muss allerdings aus optischen Gründen konzentrisch zur Kanne ausgerichtet sein und sicher an dieser gehalten werden.

Bekannt sind Wasserkocher, die an ihrer Innenmantelfläche einen Steg aufweisen, an den von unten eine Dichtung mit der Heizeinrichtung angepresst wird. Diese Anpressung kann zu einer Biegespannung auf die Mantelfläche der Kanne führen, welche über längere Zeit bei sensiblen Materialien zu optischen und zu mechanischen Schäden führen kann. Eine derartige elektrisch beheizbare Kanne ist beispielsweise aus der WO 99/17 645 bekannt.

Der vorliegenden Erfindung liegt die Aufgabe zu Grunde, ein elektrisch beheizbares Kochgeschirr mit einem außen angebrachten Abdeckring zur Verfügung zu stellen, wobei dieser zuverlässig und ohne Druck- oder Kraftbeaufschlagung an die Kanne gehalten ist.

Diese Aufgabe wird mit dem Gegenstand der unabhängigen Patentansprüche gelöst. Merkmale vorteilhafter Weiterbildungen der Erfindung ergeben sich aus den jeweiligen abhängigen Ansprüchen.

Bei einem erfindungsgemäßen elektrisch beheizbaren Kochgeschirr ist vorgesehen, dass an einem unteren Bereich einer Außenmantelfläche ein Abdeckring angebracht ist, der dort mittels wenigstens eines elastischen Elementes reibschlüssig fixiert ist. Das elastische Element kann insbesondere als zungenartiges Gummielement o. dgl. ausgebildet sein, das durch eine Aussparung in der Wandung des Kochgefäßes hindurch ragt und dass beim Aufschieben des Abdeckrings zumindest teilweise komprimiert wird. Durch die elastischen Elemente, welche aus Aussparungen an der Mantelfläche der Kanne herausragen, kann ein zusätzlich an der Kanne angebrachter Abdeckring zuverlässig und ohne Kraftbeaufschlagung auf die Mantelfläche der Kanne gehalten werden. Auch bei einer betriebsbedingten Wärmedehnung der Kanne können die elastischen Elemente in vorteilhafter Weise für einen Wegausgleich sorgen, indem sie sich komprimieren, ohne dass eine zusätzliche Kraftbeaufschlagung auf die Kanne erfolgt.

Das elastische Element bzw. die elastischen Elemente können an einem Ring angeordnet sein. Die elastischen Elemente können jedoch auch als einzelne Komponenten ausgebildet sein, welche an den vorgesehenen Positionen eingefügt werden.

Der Abdeckring kann insbesondere aus Metallblech, bspw. aus Edelstahl- oder Aluminiumblech bestehen, das einen deutlich kleineren Wärmeausdehungskoeffizienten aufweist als das Kochgefäß aus Kunststoff. Die zwischen diesem und dem Metallring angeordneten elastischen Elemente können für einen Ausgleich bei einer stärkeren Erwärmung der Gefäßwand sorgen, ohne dass auf diese eine nennenswerte Kraftkomponente ausgeübt wird.

Der Abdeckring kann wahlweise ein einteiliger, geschlossener Ring sein. Es ist jedoch auch eine Variante möglich, bei der der Abdeckring ein offener Ring ist, der an einer Verbindungsstelle durch geeignete Einrichtungen zusammen gehalten wird.

Der Abdeckring kann ggf. so ausgebildet sein, dass er Teil eines Auflagefußes des Kochgeschirrs ist. Weiterhin kann es von Vorteil sein, wenn an der Außenmantelfläche des Kochgefäßes ein Absatz vorgesehen ist, der einen bündigen Übergang zwischen den Außenflächen des Abdeckrings und des Kochgefäßes ermöglicht. Der Absatz bildet gleichzeitig einen oberen Anschlag für den Abdeckring, gegen den dieser beim Aufliegen des Kochgefäßes gedrückt wird.

Bei einem Verfahren zur Montage des erfindungsgemäßen elektrischen Kochgeschirrs kann nach dem Einsetzen einer Heizeinrichtung und ggf. eines davon separaten Gefäßbodens der Abdeckring an der Außenmantelfläche des Kochgefäßes angebracht werden, wobei die elastischen Elemente komprimiert werden, so dass dadurch der Abeckring sicher gehalten wird. Im Betrieb der Heizeinrichtung sorgen die elastischen Elemente für einen Ausgleich der Wärmedehnung und verhindern damit eine unerwünschte radiale Kraftkomponente auf die Gefäßwand aufgrund des relativ starren Abdeckrings.

Die Erfindung wird nachfolgend anhand eines bevorzugten Ausführungsbeispiels unter Bezugnahme der beiliegenden Zeichnungen näher erläutert. Dabei zeigt:
- Figur 1: ein erfindungsgemäßes elektrisch beheizbares Kochgeschirr in schematischer Darstellung,
- Figur 2: eine perspektivische Detailansicht des Kochgeschirrs gemäß Figur 1,
- Figur 3: eine weitere perspektivische Detailansicht des Kochgeschirrs und
- Figur 4: ein am Kochgeschirr montiertes elastisches Element zur Fixierung eines äußeren Abdeckrings in schematischer Perspektivdarstellung.

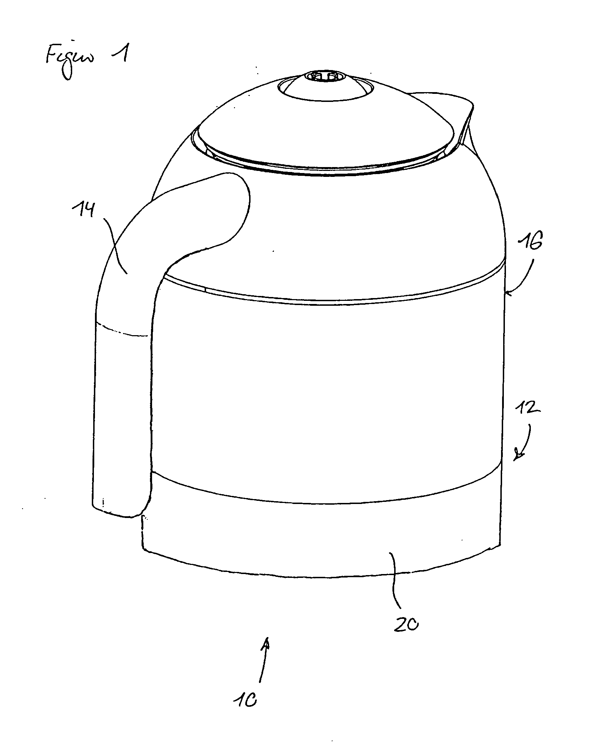

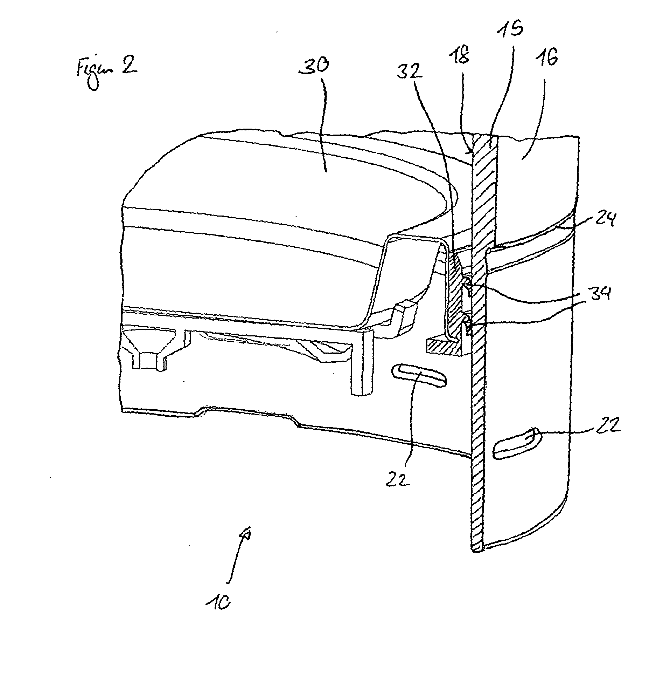

Die schematische Darstellung der Figur 1 zeigt ein elektrisch beheizbares Kochgeschirr. Dieses umfasst ein Kochgefäß 10 in Form einer Kanne aus Kunststoff, bei der in einem unteren Bereich 12 eine elektrisch betreibbare Heizeinrichtung eingesetzt ist, die insbesondere mittels eines Gefäßbodens mit dem Kochgefäß verbunden sein kann. Die Anordnung der Heizeinrichtung und des Gefäßbodens wird nachfolgend anhand der Detailschnitte der Figuren 2 bis 4 näher erläutert. Das Kochgefäß 10 weist einen Handgriff 14 auf, der an der Außenmantelfläche 16 befestigt ist und der zur Handhabung des Kochgefäßes 10, insbesondere zum Ausgießen eine darin erhitzten Flüssigkeit dient.

Weiterhin ist im unteren Bereich 12 ein Abdeckring 20 vorgesehen, der ggf. Teil eines Gefäßfußes sein kann und der vorzugsweise aus einem Metallblech, bspw. aus Aluminium- oder Edelstahlblech besteht. Der Abdeckring 20 schließt im gezeigten Ausführungsbeispiel bündig mit der Außenmantelfläche 16 des Kochgefäßes 10 ab. Der Abdeckring 20 ist vorzugsweise derart mit der Außenmantelfläche 16 des Kochgefäßes 10 verbunden, dass er bei einer erwärmungsbedingten Ausdehnung des Kochgefäßes 10 im Bereich der Heizeinrichtung keine radiale Kraft auf das Kochgefäß 10 ausübt, welche zu einer unerwünschten Beschädigung oder optischen Beeinträchtigung führen könnte.

Figur 2 zeigt in einer schematischen Detailansicht die Befestigung der Heizeinrichtung 30 an einer Innenmantelfläche 18 des Kochgefäßes 10. Die Heizeinrichtung 30 ist an ihrem äußeren Umfang mittels eines elastischen Rings 32 an der Innenmantelfläche 18 des Kochgefäßes 10 befestigt. Hierzu weist der elastische Ring 32 zwei radial abstehende Lamellen 34 auf, deren Außendurchmesser jeweils größer ist als der Innendurchmesser der Innenmantelfläche 18 des Kochgefäßes 10. Auf Grund der elastischen Verformbarkeit der Lamellen 34 biegen sich diese beim Einschieben der Heizeinrichtung 30 von unten in das Kochgefäß 10 in der in Figur 2 gezeigten Weise nach unten um, so dass eine zuverlässige Abdichtung des Innenvolumens des Kochgefäßes 10 gegen Austritt von Flüssigkeit gewährleistet ist. Gleichzeitig sorgt der Ring 32 für eine Fixierung der Heizeinrichtung 30.

In der Wandung 15 des Kochgefäßes 10 sind eine Reihe von ersten Aussparungen 22 vorgesehen, die zum Einrasten von Rasthaken 40 eines Gefäßbodens 38 dienen, so dass der Gefäßboden 38 fest mit dem Kochgefäß 10 verbunden werden kann und dabei gleichzeitig einen unteren Anschlag für die Heizeinrichtung 30 bildet. Alternativ kann der Gefäßboden 38 auch mit der Heizeinrichtung 30 verbunden werden, beispielsweise durch eine Verschraubung. Bei der Darstellung der Figur 2 ist zunächst nur die Heizeinrichtung 30 montiert. Anschließend wird der noch nicht gezeigte Gefäßboden 38 von unten angesetzt und mittels der in die Aussparungen 22 eingreifenden Rasthaken 40 lösbar befestigt.

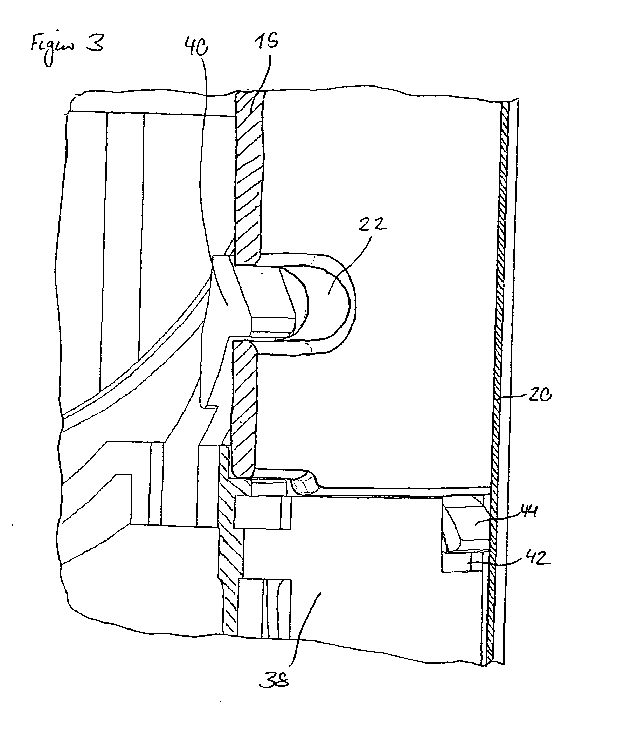

Der Detailschnitt der Figur 3 zeigt einen in einer Aussparung 22 der Wandung 15 eingerasteten Rasthaken 40 des Gefäßbodens 38. Der Gefäßboden 38 weist an seiner oberen Kante, welche an die untere Kante der Wandung 15 grenzt, eine Reihe von zusätzlichen Aussparungen 42 auf, aus denen jeweils zungenförmige Abschnitte elastischer Elemente 44 ragen. Mittels dieser elastischen Elemente 44 ist der Abdeckring 20 mit dem Kochgefäß 10 verbunden, so dass eine kraftschlüssige Verbindung mit der Außenmantelfläche 16 des Kochgefäßes 10 vermieden und dennoch eine sichere und zuverlässige Verbindung zwischen Kochgefäß 10 und Abdeckring 20 gewährleistet werden kann. Die Innenmantelfläche des Abdeckrings 20 ist damit mittels einer reibschlüssigen Verbindung über die elastischen Elemente 44 auf zuverlässige und sichere Weise mit dem Kochgefäß verbunden.

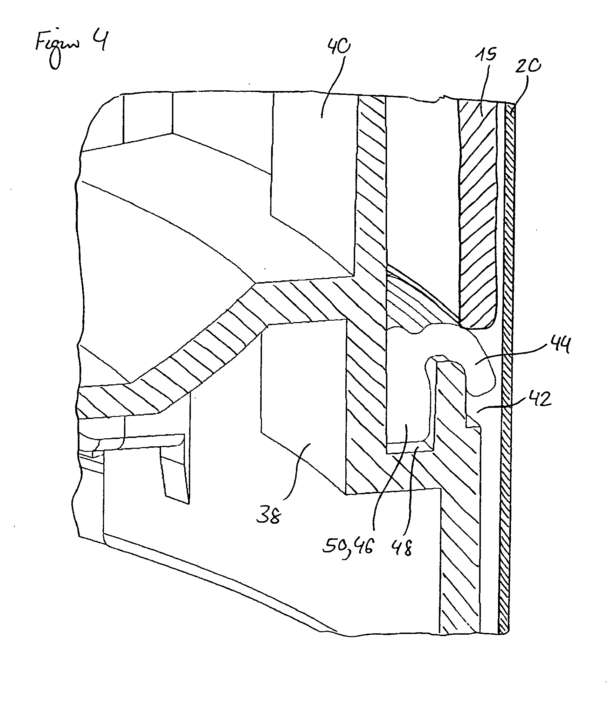

Diese Verbindung zwischen dem Abdeckring 20 und dem Kochgefäß 10 ist nochmals anhand des Detailschnitts der Figur 4 verdeutlicht. Hierbei wird erkennbar, dass die elastischen Elemente 44 durch die Aussparungen 42 an der oberen umlaufenden Kante des Gefäßbodens 38 nach außen ragen und durch den daran gehaltenen Abdeckring 20 elastisch komprimiert werden.

Die aus den Aussparungen 42 ragenden Abschnitte der elastischen Elemente 44 können wahlweise an einem durchgehenden, geschlossenen Ring 46 befestigt sein, der in einer entsprechenden ringförmigen Aufnahme 48 des Gefäßbodens 38 eingelegt ist. Der Ring 46 wäre in diesem Fall in Figur 4 geschnitten dargestellt. Die elastischen Elemente 44 können jedoch auch als separate Teile ausgebildet sein, wobei ein blockartiger Abschnitt 50 in der Aufnahme 48 fixiert und der zungenartige Abschnitt nach außen durch die Aussparungen 42 ragt.

Wahlweise können die elastischen Elemente 44 auch durch Aussparungen in der Wandung 15 des Kochgefäßes hindurch ragen. Die Befestigung kann auch auf andere Weise als der gezeigten erfolgen, bspw. durch Einsetzen der elastischen Elemente 44 von der Innenseite des Kochgefäßes her und durch geeignete Fixierung, bspw. durch Verklemmen in einem entsprechend dimensionierten Klemmsitz.

Wie insbesondere anhand der Figur 2 verdeutlicht ist, kann an der Außenmantelfläche 16 des Kochgefäßes 10 ein Absatz 24 vorgesehen sein, an dem die obere Kante des Abdeckrings 20 anliegen kann. Auf diese Weise kann ein bündiger Übergang zwischen den Außenflächen des Abdeckrings 20 und der Wandung 15 des Kochgefäßes 10 erzielt werden. Zudem bildet der Absatz 24 einen oberen Anschlag bei Montage des Abdeckrings 20, über den dieser nicht hinaus geschoben werden kann.

## Patentansprüche

1. Elektrisch beheizbares Kochgeschirr, umfassend ein Kochgefäß (10) aus Kunststoff mit einem Gefäßboden (38), der eine elektrische Heizeinrichtung (30) aufweist , welche über ein ringförmiges Dichtelement (32) form- und/oder kraftschlüssig in einem unteren Bereich (12) einer Innenmantelfläche (18) des Kochgefäßes (10) gehalten ist, und einen äußeren Abdeckring (20), der im unteren Bereich (12) einer Außenmantelfläche (16) des Kochgefäßes (10) angeordnet ist, **dadurch gekennzeichnet, dass** der Abdeckring (20) mittels wenigstens eines elastischen Elements (44) reibschlüssig an der Außenmantelfläche (16) des Kochgefäßes (10) gehalten ist.

2. Kochgeschirr nach Anspruch 1, **dadurch gekennzeichnet, dass** der Abdeckring (20) ungefähr auf Höhe des Gefäßbodens (38) angeordnet ist.

3. Kochgeschirr nach Anspruch 1 oder 2, **dadurch gekennzeichnet, dass** das wenigstens eine elastische Element (44) zum Festhalten des Außenrings (20) durch Aussparungen (42) in der Wandung (15) des Kochgefäßes (10) bzw. des Gefäßbodens (38) hindurch ragt.

4. Kochgeschirr nach einem der voranstehenden Ansprüche, **dadurch gekennzeichnet, dass** wenigstens ein elastisches Element (44) bei aufgeschobenem Abdeckring (20) elastisch verformt ist.

5. Kochgeschirr nach einem der voranstehenden Ansprüche, **dadurch gekennzeichnet, dass** das wenigstens eine elastische Element (44) für einen Ausgleich einer Wärmedehnung des Kochgefäßes (10) beim Betrieb der Heizeinrichtung (30) sorgt.

6. Kochgeschirr nach einem der voranstehenden Ansprüche, **dadurch gekennzeichnet, dass** der Abdeckring (20) aus Metallblech besteht.

7. Kochgeschirr nach einem der voranstehenden Ansprüche, **dadurch gekennzeichnet, dass** der Abdeckring (20) aus Edelstahlblech besteht.

8. Kochgeschirr nach einem der voranstehenden Ansprüche, **dadurch gekennzeichnet, dass** der Abdeckring (20) ein geschlossener Ring ist.

9. Kochgeschirr nach einem der voranstehenden Ansprüche, **dadurch gekennzeichnet, dass** ein unterer Abschnitt des Abdeckrings (20) das Kochgefäß (10) überragt und einen Auflagefuß für dieses bildet.

10. Kochgeschirr nach einem der voranstehenden Ansprüche, **dadurch gekennzeichnet, dass** an der Außenmantelfläche (16) des Kochgefäßes (10) ein Absatz (24) vorgesehen ist, an den eine obere Kante des Abdeckrings (20) bündig anschließt.

11. Kochgeschirr nach einem der voranstehenden Ansprüche, **dadurch gekennzeichnet, dass** die Außenmantelflächen (16) des oberen Bereichs des Kochgefäßes (10) und des Abdeckrings (20) miteinander fluchten.

12. Verfahren zur Montage eines elektrisch beheizbaren Kochgeschirrs, bei dem eine elektrische Heizeinrichtung (30) und ein Gefäßboden (38) in eine offene Unterseite eines Kochgefäßes (10) aus Kunststoff eingesetzt und dort montiert werden, und bei dem anschließend ein äußerer Abdeckring (20) in einem unteren Bereich (12) einer Außenmantelfläche (16) des Kochgefäßes (10) angebracht wird, **dadurch gekennzeichnet, dass** der Abdeckring (20) mittels wenigstens eines elastischen Elements (44) reibschlüssig an der Außenmantelfläche (16) des Kochgefäßes (10) gehalten wird.

13. Verfahren nach Anspruch 12, **dadurch gekennzeichnet, dass** wenigstens ein elastisches Element (44) durch Aufschieben des Abdeckrings (20) elastisch verformt wird.

14. Verfahren nach Anspruch 12 oder 13, **dadurch gekennzeichnet, dass** das wenigstenseine elastischeElement (44) für einen Ausgleich einer Wärmedehnung des Kochgefäßes (10) beim Betrieb der Heizeinrichtung (30) sorgt.

15. Verfahren nach einem der Ansprüche 12 bis 14 zur Montage eines elektrisch beheizbaren Kochgeschirrs gemäß einem der Ansprüche 1 bis 11.

## Claims

1. Electrically heatable cooking utensil, comprising a cooking vessel (10) of plastics material with a vessel base (38), which has an electric heating element (30) held in shape-locking and/or force-locking manner in a lower region (12) of an inner circumferential surface (18) of the cooking vessel (10) by way of an annular sealing element (32), and an outer cover ring (20), which is arranged in the lower region (12) of an outer circumferential surface (16) of the cooking vessel (10), **characterised in that** the cover ring (20) is held at the outer circumferential surface (16) of the cooking vessel (10) by means of at least one resilient element (44).

2. Cooking utensil according to claim 1, **characterised in that** the cover ring (20) is arranged approximately at the height of the vessel base (38).

3. Cooking utensil according to claim 1 or 2, **characterised in that** the at least one resilient element (44) for fixing the outer ring (20) projects through cut-outs (42) in the wall (15) of the cooking vessel (10) or the vessel base (38).

4. Cooking utensil according to one of the preceding claims, **characterised in that** at least one resilient element (44) is resiliently deformed when the cover ring (20) is pushed on.

5. Cooking utensil according to one of the preceding claims, **characterised in that** the at least one resilient element (44) ensures compensation for thermal expansion of the cooking vessel (10) during operation of the heating device (30).

6. Cooking utensil according to one of the preceding claims, **characterised in that** the cover (20) consists of sheet metal.

7. Cooking utensil according to one of the preceding claims, **characterised in that** the cover ring (20) consists of stainless steel sheet metal.

8. Cooking utensil according to one of the preceding claims, **characterised in that** the cover ring (20) is a closed ring.

9. Cooking utensil according to one of the preceding claims, **characterised in that** a lower section of the cover ring (20) projects beyond the cooking vessel (10) and forms a support foot for this.

10. Cooking utensil according to one of the preceding claims, **characterised in that** an offset (24) at which an upper end of the cover ring (20) adjoins in flush manner is provided at the outer circumferential surface (16) of the cooking vessel (10).

11. Cooking utensil according to one of the preceding claims, **characterised in that** the outer circumferential surfaces (16) of the upper region of the cooking vessel (10) and the cover ring (20) are aligned with one another.

12. Method of assembling an electrically heatable cooking utensil, in which an electric heating device (30) and a vessel base (38) are inserted into an open underside of a cooking vessel (10) of plastics material and mounted there, and in which subsequently an outer cover ring (20) is mounted in a lower region (12) of an outer circumferential surface (16) of the cooking vessel (10), **characterised in that** the cover ring (20) is held in friction-locking manner at the outer circumferential surface (16) of the cooking vessel (10) by means of at least one resilient element (44).

13. Method according to claim 12, **characterised in that** at least one resilient element (44) is resiliently deformed by pushing on the cover ring (20).

14. Method according to claim 12 or 13, **characterised in that** the at least one resilient element (44) ensures compensation for thermal expansion of the cooking vessel (10) during operation of the heating device (30).

15. Method according to one of claims 12 to 14 for assembling an electrically heatable cooking utensil according to one of claims 1 to 11.

## Revendications

1. Batterie de cuisine pouvant être chauffée électriquement, comprenant un récipient de cuisson (10) en matière synthétique avec un fond de récipient (38), qui présente un dispositif de chauffage (30) électrique, lequel est maintenu au moyen d'un élément d'étanchéité (32) de forme annulaire, par complémentarité de formes et/ou conjugaison de force, dans une zone (12) inférieure d'une surface d'enveloppe intérieure (18) du récipient de cuisson (10), et une bague de recouvrement (20) extérieure, qui est disposée dans la zone (12) inférieure d'une surface d'enveloppe extérieure (16) du récipient de cuisson (10), **caractérisée en ce que** la bague de recouvrement (20) est maintenue au moyen d'au moins un élément (44) élastique par adhérence de frottement sur la surface d'enveloppe extérieure (16) du récipient de cuisson (10).

2. Batterie de cuisine selon la revendication 1, **caractérisée en ce que** la bague de recouvrement (20) est disposée à peu près à la hauteur du fond de récipient (38).

3. Batterie de cuisine selon la revendication 1 ou 2, **caractérisée en ce que** le au moins un élément (44) élastique pour le maintien de la bague extérieure (20) dépasse à travers des évidements (42) dans la paroi (15) du récipient de cuisson (10) resp. du fond de récipient (38).

4. Batterie de cuisine selon l'une quelconque des revendications précédentes, **caractérisée en ce qu'**au moins un élément (44) élastique est déformé élastiquement lorsque la bague de recouvrement (20) est glissée dessus.

5. Batterie de cuisine selon l'une quelconque des revendications précédentes, **caractérisée en ce que** le au moins un élément (44) élastique assure une compensation d'une dilatation thermique du récipient de cuisson (10) lors du fonctionnement du dispositif de chauffage (30).

6. Batterie de cuisine selon l'une quelconque des revendications précédentes, **caractérisée en ce que** la bague de recouvrement (20) est à base de tôle métallique.

7. Batterie de cuisine selon l'une quelconque des revendications précédentes, **caractérisée en ce que** la bague de recouvrement (20) est à base de tôle d'acier fin.

8. Batterie de cuisine selon l'une quelconque des revendications précédentes, **caractérisée en ce que** la bague de recouvrement (20) est une bague fermée.

9. Batterie de cuisine selon l'une quelconque des revendications précédentes, **caractérisée en ce qu'**une partie inférieure de la bague de recouvrement (20) dépasse du récipient de cuisson (10) et forme un pied d'appui pour celui-ci.

10. Batterie de cuisine selon l'une quelconque des revendications précédentes, **caractérisée en ce que** sur la surface d'enveloppe extérieure (16) du récipient de cuisson (10) est prévu un décrochement (24) auquel se raccorde au même niveau un bord supérieur de la bague de recouvrement (20).

11. Batterie de cuisine selon l'une quelconque des revendications précédentes, **caractérisée en ce que** les surfaces d'enveloppe extérieure (16) de la zone supérieure du récipient de cuisson (10) et de la bague de recouvrement (20) sont alignées entre elles.

12. Procédé pour le montage d'une batterie de cuisine pouvant être chauffée électriquement, dans lequel un dispositif de chauffage (30) électrique et un fond de récipient (38) sont insérés dans un côté inférieur d'un récipient de cuisson (10) en matériau synthétique et sont montés à cet endroit, et dans lequel ensuite une bague de recouvrement (20) extérieure est placée dans une zone (12) inférieure d'une surface d'enveloppe extérieure (16) du récipient de cuisson (10), **caractérisé en ce que** la bague de recouvrement (20) est maintenue au moyen d'au moins un élément (44) élastique par adhérence de frottement sur la surface d'enveloppe extérieure (16) du récipient de cuisson (10).

13. Procédé selon la revendication 12, **caractérisé en ce qu'**au moins un élément (44) élastique est déformé élastiquement par l'introduction de la bague de recouvrement (20).

14. Procédé selon la revendication 12 ou 13, **caractérisé en ce que** le au moins un élément (44) élastique garantit une compensation d'une dilatation thermique du récipient de cuisson (10) lors du fonctionnement du dispositif de chauffage (30).

15. Procédé selon l'une quelconque des revendications 12 ou 14 pour le montage d'une batterie de cuisson pouvant être chauffée électriquement selon l'une quelconque des revendications 1 à 11.
